# EUROPEAN PATENT APPLICATION

(11) **EP 3 185 108 A1**
(43) Date of publication of application: **28.06.2017**
(21) Application number: 16202776.7
(22) Date of filing: 07.12.2016
(51) Int. Cl.: G06F 3/041, G06F 3/0354, G06F 3/042

(54) **INFORMATION PROCESSING APPARATUS, INFORMATION INPUT SYSTEM, METHOD FOR PROCESSING INFORMATION**

(30) Priority: 25.12.2015 JP 2015253811
(71) Applicant: Ricoh Company, Ltd., Tokyo 143-8555 (JP)
(72) Inventor: ONO, Yasuhiro, Ohta-ku, Tokyo 143-8555 (JP); KODAMA, Yuu, Ohta-ku, Tokyo 143-8555 (JP)
(74) Representative: White, Duncan Rohan

(57) **Abstract**

In one aspect of the present invention, an information processing apparatus (13) for detecting a position of an object on a display screen, includes acquisition means (50), object detection means (60), position detection means (61), storing means (53), object identification means (62), and determination means (63). The acquisition means (50) acquires, from one or more imaging devices, one or more images of the display screen captured with the one or more imaging devices, the one or more images of the display screen including an image of a surface or a space in vicinity of the surface of the display screen. The object detection means (60) detects an object from the one or more images acquired by the acquisition means (50). The position detection means (61) detects a position of the object detected by the object detection means (60) based on the one or more images acquired by the acquisition means (50). The storing means (53) stores position information indicating the position detected by the position detection means (61). The object identification means (62) identifies the object based on whether a notification is received from the object, during a time period from a time when the object detection means (60) detects the object to a time when a predetermined period of time elapses, the notification indicating that the object is brought into contact with the display screen. The determination means (63) determines whether to delete the position information depending on the object identified by the object identification means (62), the position information being stored by the storing means (52) during a time period from the time when the object detection means (60) detects the object to a time when the object identification means (62) identifies the object.

## Description

The present invention relates to an information processing apparatus, an information input system, and a method for processing information.

### Description of the Related Art

A system is known that includes a display, a camera provided near the display, and a retroreflector disposed at the periphery of the display. In this system, a surface of the display is irradiated with light such as an infrared beam and light reflected from the retroreflector is captured by the camera to detect an object on or near the surface of the display using triangulation. Further, palm rejection is known enabling a user to rest his/her hand on a screen while writing on a screen with a pen ("light-emitting pen") having a tip that emits light while the user rests his/her hand on the screen. With palm rejection technology, the user's palm is not detected as an input.

Furthermore, JP-2016-038902-A discloses a system that switches a detection mode between a finger detection mode and a light-emitting pen detection mode to detect both the light-emitting pen and the finger while implementing the palm rejection. In the finger detection mode, the surface of the screen is irradiated to detect and keep track of the finger. In the light-emitting pen detection mode, the irradiation on the surface of the screen is stopped to detect and keep track of the light emitted from the light-emitting pen.

In the above system, the irradiation of the surface of the screen is stopped in response to detection of presence of a certain object, and a contact of the light-emitting pen on the screen is waited until a predetermined period of time has elapsed. In a case in which the certain object is a finger, the position of the finger is not detected during this waiting time. This causes a delay in start of writing using a finger, and a beginning portion of a line that a user actually intends to write by hand is not drawn for display.

### SUMMARY

In one aspect of the present invention, an information processing apparatus (13) for detecting a position of an object on a display screen, includes acquisition means (50), object detection means (60), position detection means (61), storing means (53), object identification means (62), and determination means (63). The acquisition means (50) acquires, from one or more imaging devices, one or more images of the display screen captured with the one or more imaging devices, the one or more images of the display screen including an image of a surface or a space in vicinity of the surface of the display screen. The object detection means (60) detects an object from the one or more images acquired by the acquisition means (50). The position detection means (61) detects a position of the object detected by the object detection means (60) based on the one or more images acquired by the acquisition means (50). The storing means (53) stories position information indicating the position detected by the position detection means (61). The object identification means (62) identifies the object based on whether a notification is received from the object, during a time period from a time when the object detection means (60) detects the object to a time when a predetermined period of time elapses, the notification indicating that the object is brought into contact with the display screen. The determination means (63) determines whether to delete the position information depending on the object identified by the object identification means (62), the position information being stored by the storing means (52) during a time period from the time when the object detection means (60) detects the object to a time when the object identification means (62) identifies the object.

According to one aspect of the present invention, a line that the user actually intends to write is drawn and displayed without lack of a beginning portion of the line.

### BRIEF DESCRIPTION OF THE DRAWINGS

A more complete appreciation of the embodiments and many of the attendant advantages and features thereof can be readily obtained and understood from the following detailed description with reference to the accompanying drawings, wherein:
FIG. 1 is a schematic diagram illustrating a configuration of an information input system according to an embodiment of the present invention;
FIG. 2 is an illustration of operating modes that the information input system employs according to an embodiment of the present invention;
FIG. 3 is an illustration of a pen as an object used in the information input system according to an embodiment of the present invention;
FIG. 4 is a block diagram illustrating a hardware configuration of the pen of FIG. 3;
FIG. 5 is a block diagram illustrating a hardware configuration of an information processing apparatus included in the information input system of FIG. 1;
FIG. 6 is a block diagram illustrating a functional configuration of the information processing apparatus according to an embodiment of the present invention;
FIG. 7 is a block diagram illustrating a functional configuration of a control unit included in the information processing apparatus of FIG. 6;
FIG. 8 is a flowchart illustrating steps in an operation performed by the information processing apparatus according to an embodiment of the present invention;
FIG. 9 is an illustration of a state transition of lighting according to an embodiment of the present invention;
FIG. 10 is a flowchart illustrating steps in an operation from detecting a presence of a finger to completion of input using the finger according to an embodiment of the present invention;
FIG. 11 is a flowchart illustrating steps in an operation of detecting the pen and inputting data using the pen according to an embodiment of the present invention;
FIG. 12 is a flowchart illustrating steps in an operation of detecting the pen and inputting data using the pen according to an embodiment of the present invention, and
FIG. 13 is a flowchart illustrating steps in an operation of completing data input using the pen according to an embodiment of the present invention.

Several exemplary embodiments of the present invention will be described hereinafter with reference to drawings.

The accompanying drawings are intended to depict embodiments of the present invention and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the multiple forms as well, unless the context clearly indicates otherwise.

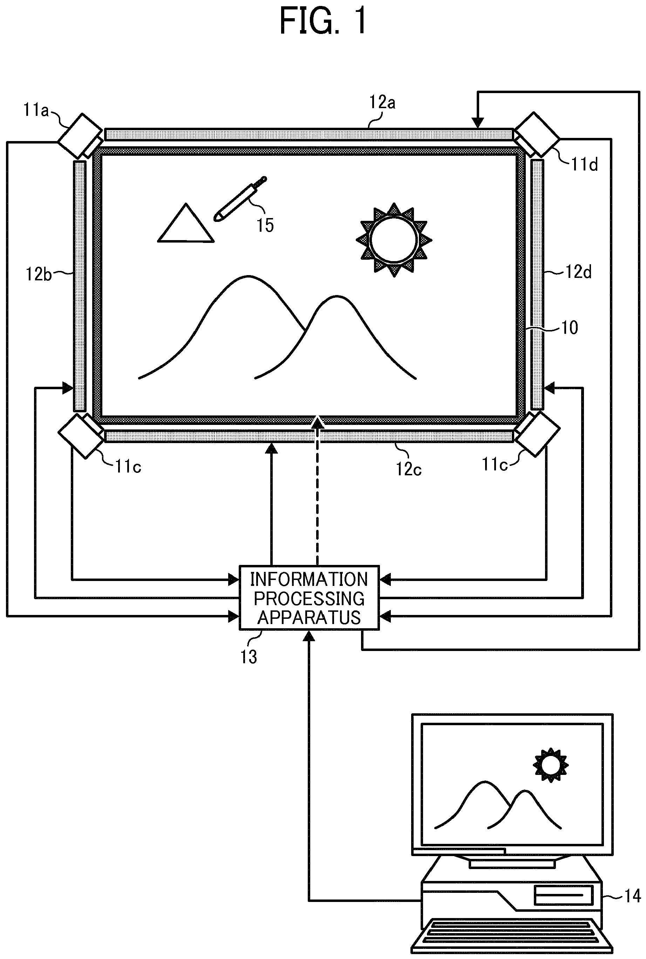

FIG. 1 is a schematic diagram illustrating a configuration of an information input system according to an embodiment of the present invention. The information input system enables an input of information on a display screen displaying an image, etc., using an electronic pen or a user's finger. The information input system includes a display 10 having a screen, imaging devices 11 a to 11 d, light-emitting devices 12a to 12d, an information processing apparatus 13, and a personal computer (PC) 14. It should be noted that although in FIG. 1 the information input system includes four imaging devices 11 a to 11 d, alternatively there may be any other number of imaging devices, provided that there is at least one imaging device. Further, it should be noted that although in FIG. 1, the information input system includes four light-emitting devices 12a to 12d, alternatively there may be any other number of imaging devices, provided that there is at least one light-emitting device. Hereinafter, any one or more imaging devices 11a to 11 d may be collectively referred to as the imaging device 11, in order to simplify description. Further, any one or more arbitrary light-emitting devices 12a to 12d may be collectively referred to as the light-emitting device 12, in order to simplify description.

The imaging devices 11 a to 11 d are respectively placed at four corners of the rectangular display 10. Each of the imaging devices 11 a to 11 d captures an image near a surface of the screen of the display 10. The imaging device 11 includes an imaging element such as a charged coupled device (CCD) image sensor and a complementary metal oxide semiconductor (CMOS) image sensor to convert incident light to electric signals. In addition, the imaging device 11 includes an analog to digital converter to convert the electric signal to digital data. The imaging device 11 further includes an image processor to perform image processing to output image data. Examples of the image processing performed by the image processor include noise removal processing using a filter. The image processing may further include correction processing such as shading correction and gamma correction.

The light-emitting devices 12a to 12d are respectively placed on or freely attached to peripheral portions of the display 10 along four edges of the rectangular display 10. Examples of light emitted by the light-emitting devices 12a to 12d include light such as fluorescent light and a light emitting diode (LED) or laser light such as an infrared laser.

The display 10, the imaging devices 11 a to 11 d, and the light-emitting devices 12a to 12d are connected to the information processing apparatus 13. The information processing apparatus 13 is connected to the PC 14. These devices may be connected to one another via a cable, or wirelessly using infrared, the Bluetooth (registered trademark), or a wireless local area network (LAN), etc.

The PC 14 stores image data of images to be displayed on the display 10, and outputs an instruction for displaying an image to the information processing apparatus 13 in accordance with a user instruction. In response to receiving this instruction and the image data, the information processing apparatus 13 causes the display 10 to display the image. The image may be a text image, an image constituted by pictures or figures, a still picture, movie, or a combination thereof.

An application for implementing detection of a position of an object on the screen of the display 10 is installed in the information processing apparatus 13. Accordingly, the information processing apparatus 13 detects, based on an image captured at the imaging devices 11 a to 11 d, a position of an object, such as a user's finger or an electronic pen 15 (referred to as a "pen 15", hereinafter), operated by the user to input data through the screen. The application, in cooperation with hardware components of the information processing apparatus 13, analyzes a gesture representing a user's action based on the detected position to implement a selection of an operating menu on the display 10 and input of information such as characters and figures.

For example, when the user touches a menu for drawing a line and then depicts a figure on the screen of the display 10 using the pen 15, the information processing apparatus 13 detects and analyzes a position touched by the pen 15 in real time to generate time-series coordinates of the positions. The coordinates are represented as two-dimensional position coordinates (x, y), assuming that the screen of the display 10 is a two-dimensional plane and a predetermined position is represented by coordinates (0, 0).

The information processing apparatus 13 connects the time-series coordinates to draw a line and displays the line on the display 10. In an example of FIG. 1, the user moves the pen 15 in a triangular shape, and the information processing apparatus 13 stores a series of the coordinates as a single stroke. Further, the information processing apparatus 13 synthesizes a triangular image expressed by the single stroke with an image containing the sun and mountains and displays the synthesized image on the display 10.

As described heretofore, the information input system according to the present embodiment is able to detect a position of an object even when the display 10 does not support a touch panel function. Accordingly, the information input system enables the user to perform various operations by touching the display 10 with the pen 15. Further, the information input system also enables the user to perform various operations using a hand or a finger instead of the pen 15.

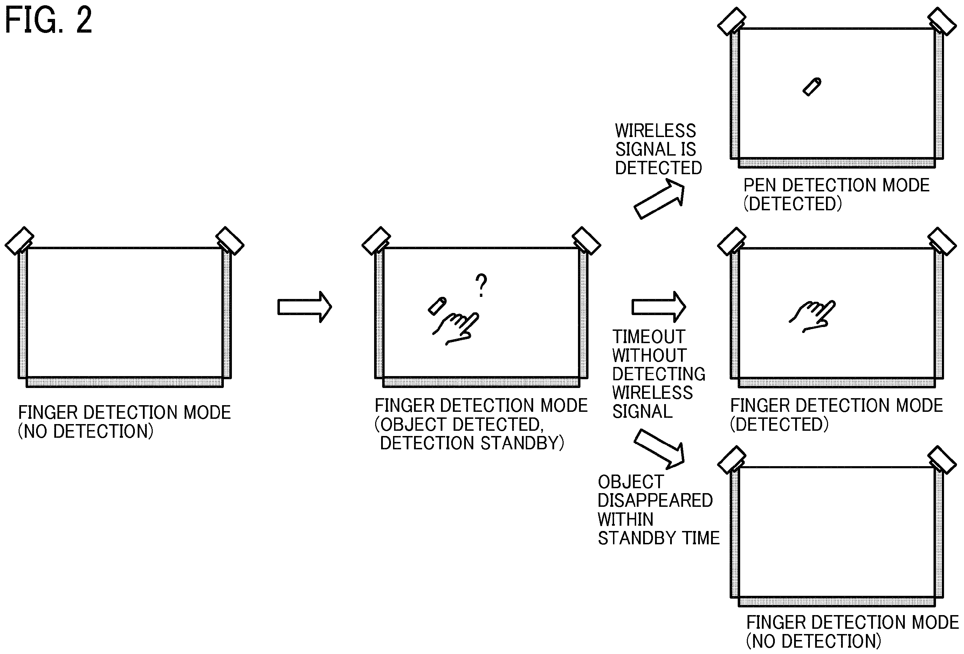

Hereinafter, a description is given of operating modes that the information input system employs with reference to FIG. 2. More specifically, the information input system employs two operating modes, i.e., a pen detection mode and a finger detection mode. In the pen detection mode, the information input system detects and keeps track of the pen 15 having a tip that emits light and draws a handwritten line on the screen. By contrast, in the finger detection mode, the information input system detects and keeps track of the finger. The pen 15 includes a contact detector 21 at a tip thereof. The contact detector 21 detects a contact of the tip on the display 10. A detailed description is given later of the pen 15. When the user touches the display 10 with the pen 15 while the information processing apparatus 13 operates in the finger detection mode, the contact detector 21 of the pen 15 detects the contact of the tip on the display 10. In response to this detection, the pen 15 emits lights from the tip and transmits a wireless signal. The wireless signal is a signal, which is output from the contact detector 21 when detecting that the pen 15 is brought into contact with the screen of the display 10. In response to receiving the wireless signal, the information processing apparatus 13 transitions from the finger detection mode to the pen detection mode.

When an object such as the pen 15 and the user's finger comes close to the screen of the display 10 while the information processing apparatus 13 operates in the finger detection mode, the light emitted from the light-emitting devices 12a to 12d is interrupted. In response to this interruption of the light from the light-emitting devices 12a to 12d, the information processing apparatus 13 detects an object and stores position information, i.e., the coordinates of the object. The information processing apparatus 13 keeps waiting for the wireless signal from the pen 15 to arrive for a predetermined period of time (referred to as a "standby time", hereinafter). In a case in which the information processing apparatus 13 receives the wireless signal from the pen 15 within the standby time, the information processing apparatus 13 erases (discards) the stored coordinates and transits to the pen detection mode. In the pen detection mode, the information processing apparatus 13 detects the coordinates of the pen 15 to implement the selection of the menu displayed on the display 10 or display of the input data.

In a case in which the information processing apparatus 13 receives no wireless signal from the pen 15 within the standby time, the information processing apparatus 13 outputs the stored coordinates and continues object detection in the finger detection mode. This information input system cannot detect the contact of the finger on the screen of the display 10. Therefore, if data input after the standby time has elapsed are displayed on the display 10, a beginning portion of a line that the user actually intends to write by hand is not drawn and displayed. To address this issue, in this information input system, the information processing apparatus 13 stores the coordinates during a period of time from the detection of the object until the end of the standby time. Accordingly, even in a case in which the information processing apparatus 13 receives no wireless signal from the pen 15, the beginning portion of the line is displayed using the stored coordinates. By contrast, because the information input system is able to detect the pen 15 as being brought into contact with the screen, the coordinates detected after the contact are output for drawing. Accordingly, the coordinates stored before the contact are discarded as described above.

In a case in which an object such as the pen 15 and the finger comes close to the screen and then moves away from the screen before touching the screen, the information processing apparatus 13 no longer detects the object before receiving the wireless signal within the standby time. Accordingly, the information input system determines that the detected gesture is not for data input and discards the stored coordinates. Then, the finger detection mode is continued.

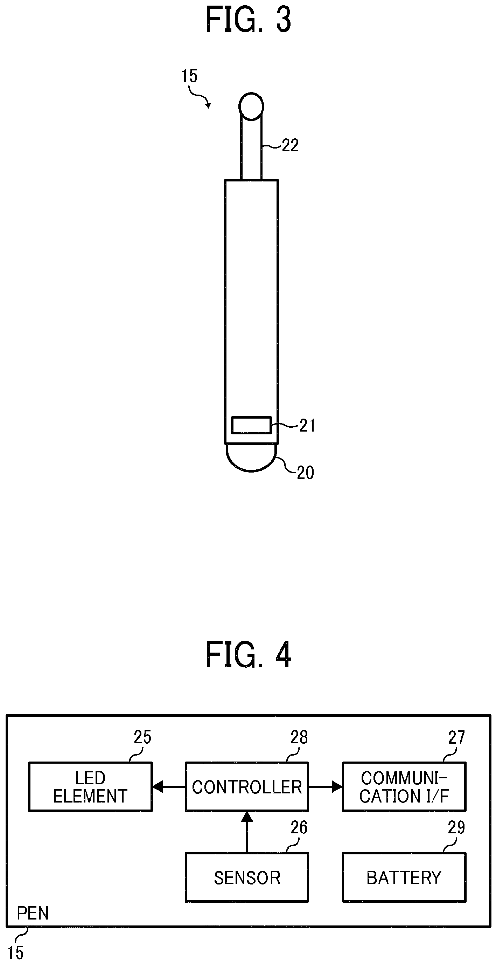

Hereinafter, a description is given of the pen 15 with reference to FIG. 3. The pen 15 is used for selecting a desired menu displayed on the display 10 or inputting information such as characters and figures. As illustrated in FIG. 3, the pen 15 includes a tip portion 20 and the contact detector 21. Infrared light is emitted from the tip portion 20. The contact detector 21 detects a physical contact (touch) of the tip portion 20 on the screen of the display 10 or a physical non-contact (detach) of the tip portion 20 from the screen. The pen 15 further includes a wireless notification unit 22 that transmits, to the information processing apparatus 13, the wireless signal indicating contact or non-contact (detach) of the pen 15 on or from the screen.

The contact detector 21 detects pressure applied to the tip portion 20, which is caused as the tip portion 20 is made in contact with the screen, to output a signal indicating that the pen 15 has been brought into contact with the screen. Note that this detection of the contact of the pen 15 on the screen is just one example, and the detection may be made in any other desired manner. The tip portion 20 emits infrared light in response to the detection of the contact by the contact detector 21. The wireless notification unit 22 notifies the information processing apparatus 13 of information indicating that the pen 15 is brought into contact with the screen in response to the detection of the contact by the contact detector 21. This information indicating that the pen 15 is brought into contact with the screen is referred to as "contact information" hereinafter. By contrast, the wireless notification unit 22 notifies the information processing apparatus 13 of information indicating that the pen 15 is made apart from the screen in response to the detection of the non-contact by the contact detector 21. This information indicating that the pen 15 is made apart from the screen is referred to as "non-contact information" hereinafter.

Hereinafter, a description is given of a hardware configuration of the pen 15 with reference to FIG. 4. As illustrated in FIG. 4, the pen 15 includes a light emitting diode (LED) element 25, a sensor 26, a communication interface (I/F) 27, and a controller 28. The LED element 25 emits infrared light. The sensor 26 detects a contact of the object on the screen of the display 10. The communication interface 27 transmits the wireless signal. The controller 28 controls operations of the LED element 25, the sensor 26, and the communication interface 27. The pen 15 further includes a battery 29 to supply power to these hardware components. The controller 28 is activated by power supplied from the battery 29 and performs various types of processing, such as detection of the object on the screen, emission of infrared light, and transmission of the wireless signal.

The pen 15 may further include a memory device to store attribute information such as a unique identification (ID) data. In this case, the wireless notification unit 22 may transmit the wireless signal containing the ID data. With this configuration, in a case a plurality of pens 15 are used for data input, the information processing apparatus 13 is able to identify the pen 15 using the transmitted ID.

In an example, light is emitted from the tip portion 20 of the pen 15 whenever the tip portion 20 is in contact with the screen of the display 10. Alternatively, the pen 15 may include a sensor such as an acceleration sensor that enables estimation of a use state of the pen 15. In this case, the controller 28 may determine whether or not the user is moving the pen 15 based on an output signal from the sensor of the pen 15. When the controller 28 determines that the user is not moving the pen 15, the controller 28 controls the LED element 25 to turn off the light. Thus, the light is turned off in the appropriate timings, extending the life of the battery 29.

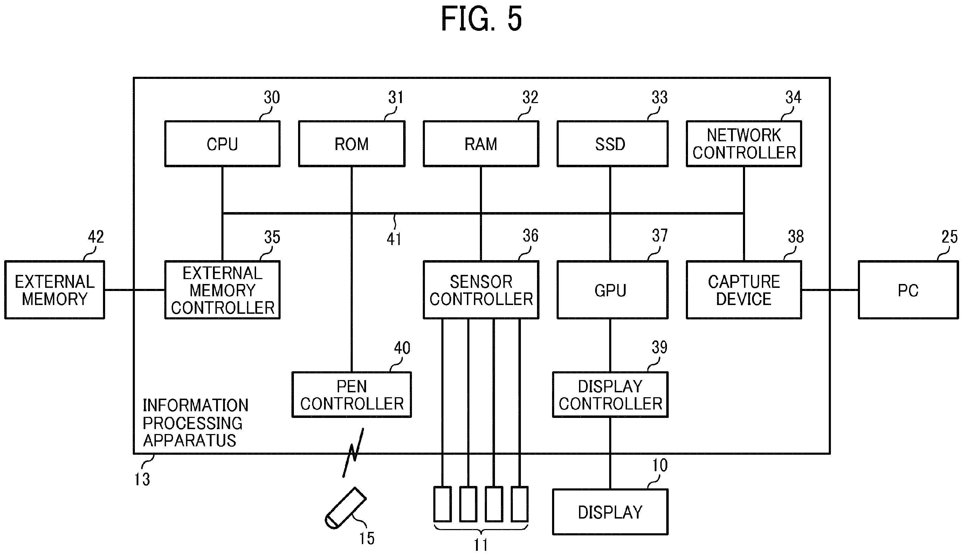

Hereinafter, a description is given of a hardware configuration of the information processing apparatus 13 with reference to FIG. 5. As illustrated in FIG. 5, the information processing apparatus 13 includes a central processing unit (CPU) 30, a read-only memory (ROM) 31, a random access memory (RAM) 32, and a solid-state drive (SSD) 33. Further, the information processing apparatus 13 includes a network controller 34, an external memory controller 35, a sensor controller 36, a graphics processor unit (GPU) 37, and a capture device 38. Furthermore, the information processing apparatus 13 includes a display controller 39 and a pen controller 40. These hardware components are connected to one another via a bus 41.

The CPU 30 controls an entire operation of the information processing apparatus 13. Specifically, the CPU 30 executes programs including the above-described application to detect the object and the position of the object. The ROM 31 stores programs such as a boot program for starting the information processing apparatus 13, firmware, etc. The RAM 32 is used as a work area by the CPU 30 when executing the programs to perform various processing. The SSD 33 stores an operating system (OS), the above-described application, image data, etc. Although a description is given of an example in which the information processing apparatus 13 includes the SSD 33, the SSD 33 is merely one example of a storage medium. Alternatively, the information processing apparatus may include a hard disk drive (HDD).

The network controller 34 controls communication with a server and the like via a network based on communication protocols such as the TCP/IP. The network is implemented by, for example, a local area network (LAN), or a wide area network (WAN), such as the Internet, configured by connecting a plurality of LANs.

The external memory controller 35 writes data to an external memory 42 or reads out data from the external memory 42. The external memory 42 is a detachable memory device such as a universal serial bus (USB) memory and a secure digital (SD) memory card. The capture device 38 captures images displayed on a display of the PC 14. The GPU 37 is a processor that computes a value of each pixel of the display 10. The display controller 39 outputs an image drawn by the GPU 37 to the display 10.

The imaging devices 11 a to 11 d are connected to the sensor controller 36. The sensor controller 36 detects a position of the object on the screen of the display 10 as coordinates using triangulation. Specifically, using triangulation, a baseline is created by connecting two imaging devices 11 whose positions are known. Then, the angles between each point of the baseline and the object are measured and the position of the object is determined based on the measured angles.

The pen controller 40 performs wireless communication with the pen 15 to receive the above-described wireless signal from the pen 15. With this configuration, the information processing apparatus 13 is able to detect whether a tip (the tip portion 20) of the pen 15 is pressed on the screen of the display 10. In a case in which the wireless signal contains ID data, the information processing apparatus 13 is able to identify which pen 15 is in contact with the screen.

The above-described application can be either stored in the external memory 42, or can be downloaded from a server via the network controller 34. Alternatively, the application can be downloaded as compressed data or executable format data.

It should be noted that although in FIG. 5 the information processing apparatus 13 includes the network controller 34, the external memory controller 35, the GPU 37, the capture device 38, and the display controller 39, alternatively these hardware components are optional.

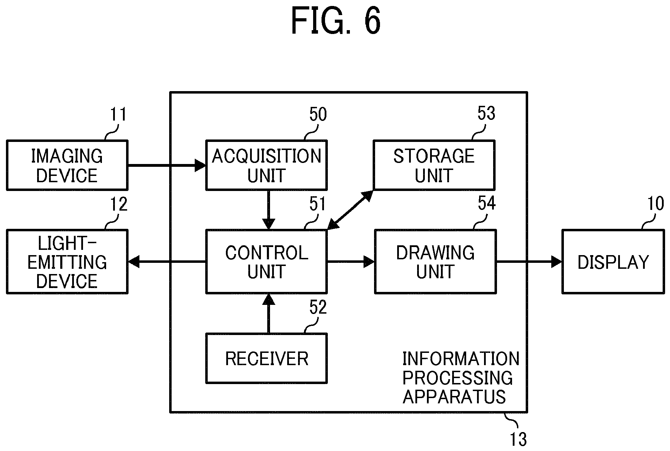

Hereinafter, a description is given of a functional configuration of the information processing apparatus 13 with reference to FIG. 6. As illustrated in FIG. 6, the information processing apparatus 13 includes an acquisition unit 50, a control unit 51, a receiver 52, a storage unit 53, and a drawing unit 54. These functional blocks 50 to 54 are implemented by one or more hardware components illustrated in FIG. 5, when operating in accordance with instructions from the CPU 30 executing according to the application as a program loaded into the RAM 32 from the SDD 33. In FIG. 6, the display 10, the imaging device 11, and the light-emitting device 12 are also illustrated in addition to these functional blocks.

The imaging device 11 captures an image of a space near the screen of the display 10 and outputs image data of the captured image. The acquisition unit 50 acquires the image data that is output from the imaging device 11. The imaging device 11 constantly captures images at a specific interval and sequentially outputs the image data. Accordingly, the acquisition unit 50 acquires the image data at a specific interval. In a case in which the four imaging devices 11 a to 11 d constitute the imaging device 11, the acquisition unit 50 acquires four pieces of image data at the specific interval.

The acquisition unit 50 passes the image data to the control unit 51 each time the acquisition unit 50 acquires the image data from the imaging device 11. In response to receiving the image data from the acquisition unit 50, the control unit 51 detects whether the object is present in the image. In a case in which the object is present in the image, the control unit 51 detects a position of the object. The storage unit 53 stores the position information of the detected position. The control unit 51 identifies the object based on whether the receiver 52 receives, from the object, a notification indicating that the object is brought into contact with the screen, within a period of time from the detection of the object until the end of the standby time. The control unit 51 switches the operating mode in accordance with the identified object to control the light-emitting device 12 to emit light (turn on the light) or to stop the emission of light (turn off the light). In other words, the control unit 51 controls on-and-off of the LED element 25.

The control unit 51 determines whether to erase (discard) the position information that is stored in the storage unit 53 for a period of time from the detection of the object until the object is identified. The control unit 51 instructs the drawing unit 54 to draw an image such as a line based on the position information. In response to receiving the instruction from the control unit 51, the drawing unit 54 forms a line by connecting the coordinates to draw the image as described above. Further, the drawing unit 54 synthesizes the drawn image with an image that is currently displayed on the screen to display the synthesized image on the display 10. In a case in which no image is currently displayed on the screen, the drawing unit 54 displays only the drawn image.

In a case in which the object is the pen 15, the receiver 52 receives the contact information or the non-contact information as the wireless signal within the standby time. In a case in which the object is an object other than the pen 15, such as the finger, the receiver 52 receives neither the contact information nor the non-contact information within the standby time. This is because the object other than the pen 15, such as the finger, transmits no information indicating the contact or non-contact of the object on the screen.

The control unit 51 is able to detect the presence of a plurality of objects and detect the position of each object. The storage unit 53 may include one storage area or a plurality of storage areas. In a case in which the storage unit 53 includes the plurality of storage areas, the storage unit 53 is able to store the position information of the plurality of objects respectively in the plurality of storage areas.

In a case in which a plurality of pens 15 are detected and each pen 15 transmits the wireless signal containing ID data, each ID is associated with one of the plurality of the storage areas. Further, even when the pen 15 does not include ID data in the wireless signal, the control unit 51 may identify the plurality of pens 15 based on a color of the light emitted from each pen 15. In this case, a plurality of colors are associated respectively with the plurality of storage areas. For example, the pen 15 that emits red light and the pen 15 that emits blue light are associated respectively with a first storage area and a second storage area. Accordingly, the position information of each pen 15 is stored in each storage area.

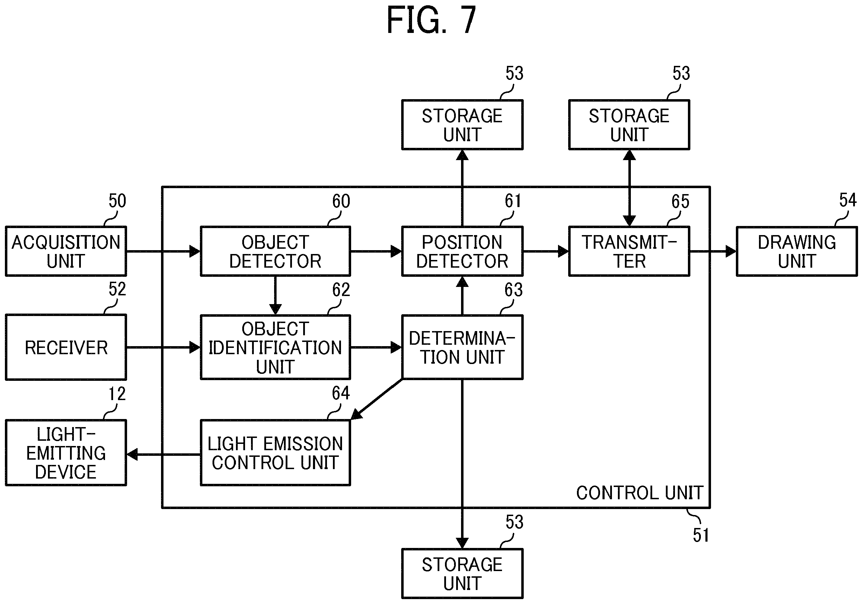

Hereinafter, a description is given of the control unit 51 with reference to FIG. 7. As illustrated in FIG. 7, the control unit 51 includes an object detector 60, a position detector 61, an object identification unit 62, and a determination unit 63. The operating mode is set to the finger detection mode in order to detect an object such as the pen 15 and the finger. In the pen detection mode, the screen of display 10 is irradiated with light from the light-emitting device 12.

The acquisition unit 50 passes the image data to the object detector 60 of the control unit 51. This image data is data of an image obtained by capturing a space near the screen of the display 10 by the imaging device 11. In a case in which an object is present in the space, the light emitted from the light-emitting device 12 is blocked by the object. Accordingly, in a case in which an object is present in the space, the image received from the acquisition unit 50 contains a shadow of the object. The shadow is an area having a luminance that is less than or equal to a preset threshold. Accordingly, the object detector 60 detects the object based on the presence of the shadow. In a case in which the image contains two shadows, the object detector 60 detects that two objects are present in the space captured by the imaging device 11. Because the object has not yet been brought into contact with the screen, the control unit does not identify the object yet.

In response to the detection of the object by the object detector 60, the position detector 61 detects the position of the object based on the image represented by the image data. As the positions of the imaging devices 11 a to 11 d and the intervals therebetween are known in advance, the position of the object is calculated using the triangulation as described above. It should be noted that, in a case in which the image is captured by the single imaging device 11 positioned in front of the display 10, the position of the object relative to a reference position (0, 0) is obtained as coordinates without the calculation using the triangulation. The captured image is constituted by a plurality of pixels. Accordingly, a pixel constituting the shadow is specified and the coordinates of the specified pixel are obtained. In a case in which the shadow contains plural pixels, for example, a pixel at a center of the plural pixels is specified, and the coordinates of the specified pixel are obtained.

The object identification unit 62 identifies the object based on whether the receiver 52 receives, from the object, a notification indicating that the object is brought into contact with the screen, within a period of time from the detection of the object by the object detector 60 until the end of the standby time. In other words, in a case in which the receiver 52 receives the wireless signal from the object until the standby time elapses, the object identification unit 62 identifies the detected object as the pen 15. This is because only the pen 15 is an object that transmits the wireless signal. In a case in which an object other than the pen 15 transmits a wireless signal, the object identification unit 62 identifies the object based on a content of the wireless signal. For example, in a case in which the wireless signal contains ID data, the object identification unit 62 identifies the object based on ID data. By contrast, in a case in which the receiver 52 receives no wireless signal from the object before the standby time elapse, the object identification unit 62 identifies the detected object as an object other than the pen 15. In this example, the object identification unit 62 identifies the object other than the pen 15 as the finger.

In a case in which the object detector 60 no longer detects the object within the standby time, the object identification unit 62 stops (cancels) identification of the object. In this case, the storage unit 53 erases the position information stored therein. This is because the stored position information is not used for drawing.

The determination unit 63 determines, based on the object identified by the object identification unit 62, whether to erase the position information stored by the storage unit 53 for the period of time from the detection of the object by the object detector 60 until the object is identified by the object identification unit 62. Specifically, in a case in which the object identification unit 62 identifies the object as the pen 15, the determination unit 63 determines that the position information that the storage unit 53 stores until the identification of the pen 15 is to be erased. Writing with the pen 15 starts at a timing when the pen 15 is brought into contact with the screen of the display 10. Accordingly, the position information detected since the object identification unit 62 has identified the object as the pen 15 in response to the contact of the pen 15 on the screen is used for drawing the image. Thus, the position information stored by the storage unit 53 before the identification of the pen 15 is not used for drawing the image based on input with the pen 15. Further, in a case in which the object identification unit 62 stops (cancels) identification of the object, the determination unit 63 determines that the position information is to be erased. Accordingly, the determination unit 63 instructs the storage unit 53 to erase the position information.

In a case in which the object identification unit 62 identifies the object as an object other than the pen 15, i.e., the finger, the determination unit 63 determines that the storage unit 53 should keep storing the position information, which has been obtained during a time until the standby time elapses and the object is identified as an object other than the pen 15. The finger transmits no wireless signal even when the user touches the screen of the display 10 with the finger. Accordingly, the determination unit 63 has to wait until the standby time elapses before determining whether to instruct the storage unit 53 to erase the position information. While the determination unit 63 waits until the standby time elapses, the user may try to input data with the finger. Accordingly, if an image is drawn using the position information of the finger detected only after the standby time elapses, the resultant drawn image may not have a beginning portion of a line that the user actually intends to write by hand. The position information stored by the storage unit 53 is used for compensating this beginning portion that may be missing from the drawn image.

The control unit 51 further includes a light emission control unit 64 and a transmitter 65. The object detector 60 acquires information as to whether the light-emitting device 12 is emitting light, i.e., whether the light is on or off, based on the image data received from the acquisition unit 50. When the light is on, the position detector 61 detects the position of the finger. By contrast, when the light is off, the position detector 61 detects the position of the tip portion 20 that is emitting light. The operating mode is set to the finger detection mode when the light is on. By contrast, the operating mode is set to the pen detection mode when the light is off. The determination as to whether the light is on or off is made based on data of luminance of each of pixels constituting the image represented by the image data. For example, in a case in which more than or equal to a specific number of pixels have luminance exceeding a predetermined value, the object detector 60 determines that the light is on. By contrast, in a case in which less than the specific number of pixels have luminance exceeding the predetermined value, the object detector 60 determines that the light is off.

In the case in which the object identification unit 62 identifies the object as the pen 15 and the current operating mode is the finger detection mode, the determination unit 63 instructs the light emission control unit 64 to switch the operating mode from the finger detection mode to the pen detection mode. In response to receiving this instruction, the light emission control unit 64 controls the light-emitting device 12 to turn off the light (to stop the emission of light). In the case in which the object identification unit 62 identifies the object as the finger or an object other than the pen 15 and the current operating mode is the pen detection mode, the determination unit 63 instructs the light emission control unit 64 to switch the operating mode from the pen detection mode to the finger detection mode. In response to receiving this instruction, the light emission control unit 64 controls the light-emitting device 12 to turn on the light (to emit light).

The transmitter 65 converts the position information of the position detected by the position detector 61 into a standard format used for storing coordinate information, such as a human interface device (HID) standard. In other words, the transmitter 65 converts the position information into a format that is interpretable by a personal computer, etc. For example, in a case in which the coordinate information represents a position of the pen 15, the transmitter 65 converts the information into a format for a pen. More specifically, the transmitter 65 converts the information into any one of a stylus event, a digitizer event, a stylus event and a digitizer report. Further, in a case in which the coordinate information represents a blocking object other than the pen 15 such as the finger, the transmitter 65 converts the information into a format for touch. More specifically, the transmitter 65 converts the information into a touch event or a touch report.

The transmitter 65 transmits the formatted position information to the storage unit 53 or to the drawing unit 54. The drawing unit 54 performs drawing based on the position information received from the transmitter 65. Further, the transmitter 65 transmits, to the drawing unit 54, the position information stored by the storage unit 53 that is determined to be kept by the determination unit 63. The drawing unit 54 performs drawing based on the position information received from the transmitter 65. It should be noted that although in FIG. 7 three storage units 53 are illustrated, they are actually the same single storage unit 53.

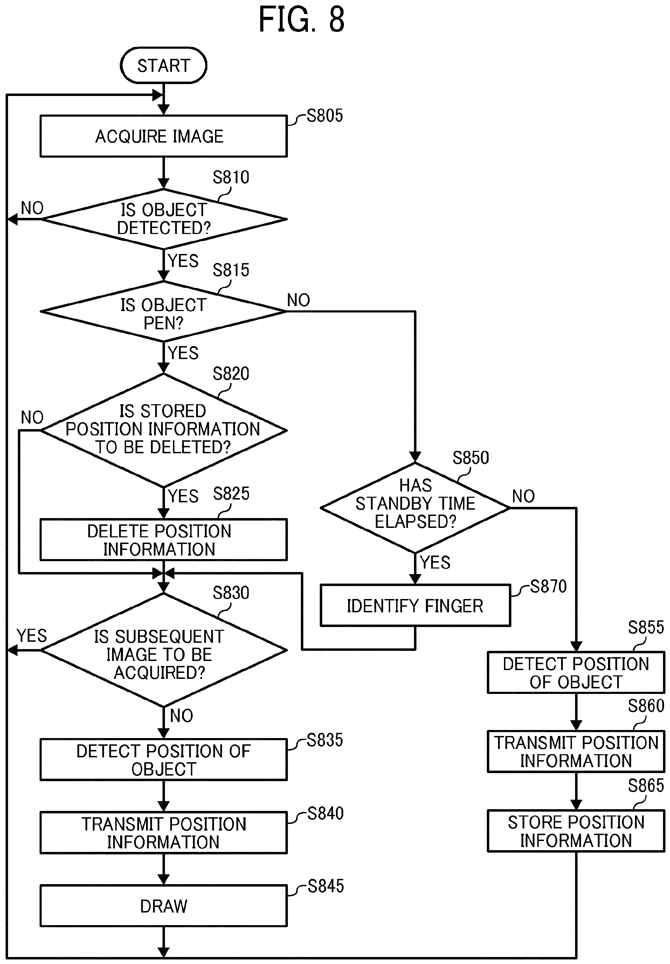

Hereinafter, a description is given of steps in an operation performed by the information processing apparatus 13 with reference to FIG. 8. First, at S805, the acquisition unit 50 acquires image data (i.e., an image) from the imaging device 11. At S840, the object detector 60 checks whether an object is present based on the acquired image. When no object is present, the processing returns to S805. When an object is present, the processing proceeds to S815. In other words, the steps S805 and S810 are repeated until the object detector 60 detects the object.

At S815, the object identification unit 62 determines whether the detected object is the pen 15 based on whether the receiver 52 has received the wireless signal. In a case in which the object identification unit 62 identifies the object as the pen 15, the processing proceeds to S820. At S820, the determination unit 63 determines whether the position information stored by the storage unit 53 is to be erased. In a case in which the determination unit 63 determines that the position information is to be erased, the storage unit 53 erases the position information at S825, and the processing proceeds to S830. By contrast, in a case in which the determination unit 63 determines that the position information is to be kept, the processing proceeds to S830.

At S830, the determination unit 63 determines whether a subsequent image is to be acquired. More specifically, at S830, when a status is a light-off standby, the determination unit 63 determines that the subsequent image is to be acquired, and the processing returns to S805. By contrast, in a case in which the determination unit 63 determines that the subsequent image is not to be acquired, the processing proceeds to S835. The determination unit 63 makes determination as to whether to erase the position information as described above as well as whether to acquire the image. Further, the determination unit 63 instructs the position detector 61 to detect the position of the object based on the acquired image.

At S835, the position detector 61 detects the position of the object based on the acquired image. At 840, the transmitter 65 transmits the position information of the detected position. At S845, the drawing unit 54 performs drawing. After the completion of drawing by the drawing unit 54, the processing returns to S805, and the processing is repeated from S805. Although, in fact, the transmitter 65 transmits the formatted position information as described above, a description is given hereinafter assuming that the formatted position information is just the position information, in order to simplify description.

In a case in which the object identification unit 62 does not identify the object as the pen 15, the processing proceeds to S850. At S850, the object identification unit 62 checks whether the standby time has elapsed. In a case in which the standby time has not yet elapsed, the processing proceeds to S855. At S855, the position detector 61 detects the position of the object based on the acquired image in accordance with the instruction from the determination unit 63. At S860, the transmitter 65 transmits the position information of the detected position to the storage unit 53. At S865, the storage unit 53 stores the position information received from the transmitter 65, and the processing returns to S805. In response to receiving the position information, the storage unit 53 stores the position information in a chronological order in the storage area that the storage unit 53 includes.

In a case in which the standby time has elapsed at S850, the processing proceeds to S870. At S870, the object identification unit 62 identifies the object as the finger. Subsequently, the processing proceeds to S830. In this case, at S840, in a case in which the position information stored by the storage unit 53 is present, the transmitter 65 transmits, to the drawing unit 54, the position information stored by the storage unit 53 as well as the position information of the position of the object detected at S835. After the transmission at S840, the position information stored by the storage unit 53 is erased.

In a case in which the current operating mode is the finger detection mode and the object identification unit 62 identifies the object as the pen 15 at S815, the operating mode is switched to the pen detection mode. By contrast, in a case in which the current operating mode is the pen detection mode and the object identification unit 62 identifies the object as the finger at S870, the operating mode is switched to the finger detection mode. The emission of light by the light-emitting device 12 is turned off in accordance with the switching from the finger detection mode to the pen detection mode. On the other hand, the emission of light by the light-emitting device 12 is turned on in accordance with the switching from the pen detection mode to the finger detection mode. A transitional state intervenes between the turning-off and the turning-on of light emission. In other words, the lighting is switched between on and off via the transitional state.

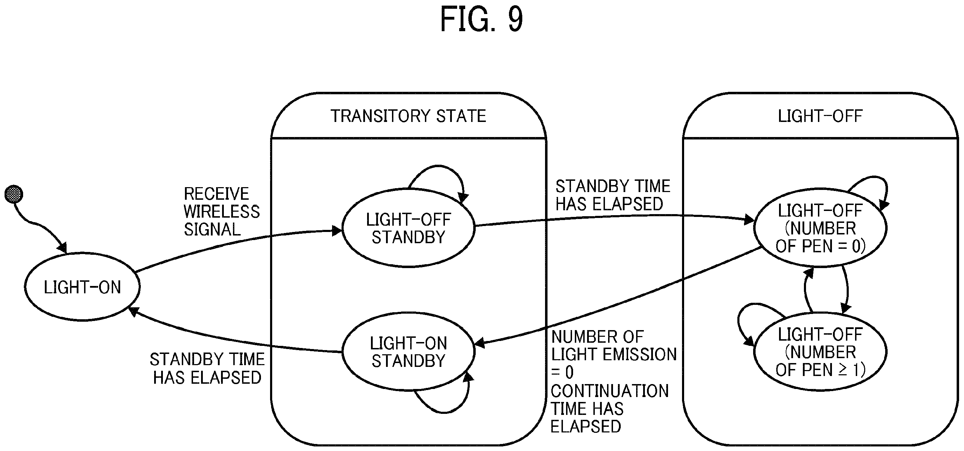

Hereinafter, a description is given of a state transition of the light emission with reference to FIG. 9. The light-emission state is switched among three states, that is, a light-on state, a light-off state, and the transitional state. When the power supply of the information input system is turned on and the information input system starts operating, the operating mode is set to the finger detection mode as a default mode. Accordingly, in this initial state, the light-emission by the light-emitting device is turned on (light-on state). When the object identification unit 62 identifies the object as the pen 15 in response to the reception of the wireless signal by the receiver 52 from the wireless notification unit 22 of the pen 15 illustrated in FIG. 3, the emission of light is turned off (light-off state) after the light-off standby (transitional state).

A period of time of the light-off standby illustrated in FIG. 9 is different from the standby time described above. Assuming that a frequency (frame frequency) for driving the imaging device 11 or the light-emitting device 12 is 120 Hz, for example, the image is captured at every cycle (about 8.3 milliseconds), and the switching of light emission is performed during a certain cycle. Accordingly, even when the light-emission is switched during the certain cycle, this switching is reflected on an image or images captured a subsequent cycle or cycles. In order to detect the presence of object or detect the position of object based on the image on which the switching of light emission is reflected, the object detector 60 or the position detector 61 waits until the subsequent cycle before detecting the presence of object or detecting the position of object. This waiting is the light-off standby, and a period of time during which the object detector 60 or the position detector 61 waits until the subsequent cycle before detecting the presence of object or detecting the position of object is the period of time of the light-off standby described above.

While the pen 15 is being continuously detected after the light emission is switched to the light-off state, the light-off state is maintained. However, when a state in which the pen 15 is not detected lasts for more than or equal to a certain period of time, the light emission transitions to a light-on standby, which is a transitional state that is similar to the light-off standby described above. After the light-on standby, the light emission is turned on (light-on state).

The information input system employs the pen detection mode for enhancing the accuracy of input with pen 15. For this reason, in a case in which both the pen 15 and the finger are present on the screen of the display 10, the operating mode is set to the pen detection mode in preference to the finger detection mode. Therefore, while even single pen 15 is detected as being in contact with the screen, the pen detection mode is continued, and the light-off state is maintained.

The pen 15 that is in contact with the screen could be more than one. Further, the finger that is present on the surface of the screen could be more than one. Accordingly, the information input system supports a multi-touch operation. When all the pens 15 are made apart from the screen of the display 10, the operating mode transitions to the finger detection mode from the pen detection mode. Accordingly, the light-emission state transitions to the transitional state (i.e., the light-on standby) and then to the light-on state. This light-on standby is similar to the light-off state.

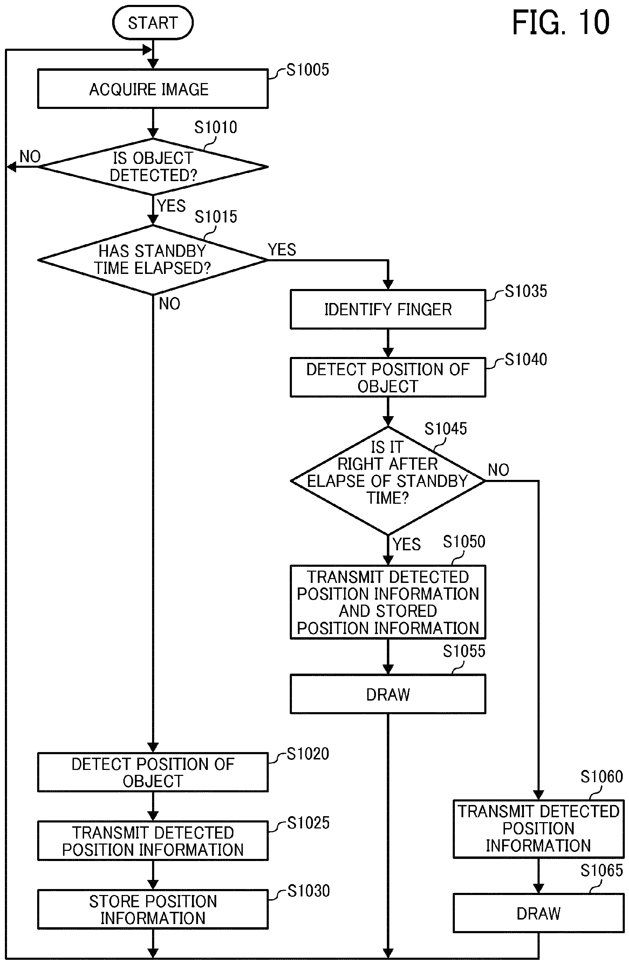

Hereinafter, a description is given of steps in an operation of detecting the object, identifying the object as the finger, and inputting data with the finger, starting from a state in which no object is detected, with reference to FIG. 10. First, at S1005, the acquisition unit 50 acquires an image from the imaging device 11. At S1010, the object detector 60 checks whether an object is present based on the acquired image. When no object is present, the processing returns to S1005. When an object is present, the processing proceeds to S1015.

At S1015, the object identification unit 62 checks whether 100 milliseconds as an example of the standby time has elapsed. In other words, the object identification unit 62 checks whether 100 milliseconds has elapsed since the object detector 60 detected the object. Because FIG. 10 illustrates an example of operation in which an object is detected and the object is identified as the finger, S815 of FIG. 6 is omitted. Further, the steps performed after the identification of the object as the pen 15 are also omitted.

In a case in which the standby time has not yet elapsed, the processing proceeds to S1020. At S1020, the position detector 61 detects the position of the object based on the acquired image in accordance with an instruction from the determination unit 63. At S1025, the transmitter 65 transmits the position information of the detected position to the storage unit 53. At S1030, the storage unit 53 stores the position information received from the transmitter 65, and the processing returns to S1005. In response to receiving the position information, the storage unit 53 stores the position information in a chronological order in the storage area that the storage unit 53 includes. The processing from S1015 to S1030 is repeated until the standby time elapses.

In a case in which the standby time has elapsed, the processing proceeds to S1035. At S1035, the object identification unit 62 identifies the object as the finger. At S1040, the position detector 61 detects the position of the finger based on the acquired image in accordance with an instruction from the determination unit 63. At S1045, the transmitter 65 determines whether a current time is immediately after the elapse of the standby time. For example, the transmitter 65 checks whether the position information stored by the storage unit 53 is present to determine whether the current time is immediately after the elapse of the standby time.

In a case in which the current time is immediately after the elapse of the standby time, the processing proceeds to S1050. At 1050, the transmitter 65 transmits, to the drawing unit 54, the position information stored by the storage unit 53 as well as the position information of the detected position. At S1055, the drawing unit 54 performs drawing. By contrast, in a case in which the current time is not immediately after the elapse of the standby time, the processing proceeds to S1060. At S1060, the transmitter 65 transmits the position information of the detected position, and the drawing unit 54 performs drawing at S1065. After the drawing is performed at S1055 or S1065, the processing returns to S1005.

While the presence of finger is being continuously detected, the detection of position of the finger at S1040, the transmission of position information at S1060, and the drawing at S1065 are repeated. When the finger is moved away from the screen of the display 10 and the object is no longer detected at S1010, the steps S1005 and S1010 are repeated until the object detector 60 again detects the object.

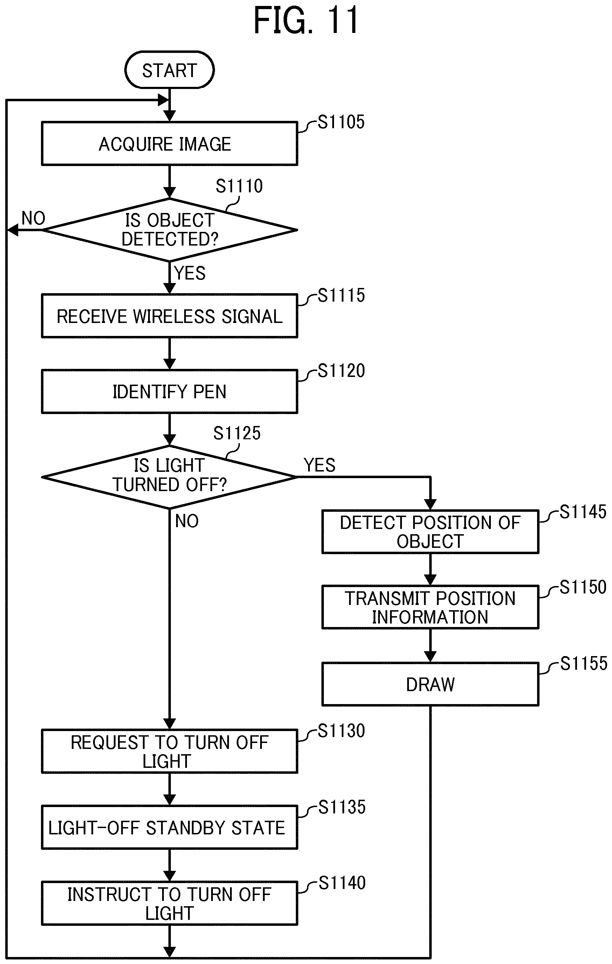

Hereinafter, a description is given of steps in an operation of detecting the object, identifying the object as the pen 15, and inputting data with the pen 15, starting from a state in which no object is detected, with reference to FIG. 11. The operation illustrated in FIG.

11 is an operation performed in a case in which no interruption is detected because the pen 15 approaches the screen of display 10 at high speed. In this example, no interruption is detected during a cycle (8.3 milliseconds) at which processing of detecting the object and identifying the object is repeated. Accordingly, the detection of the object and the identification of the object as the pen 15 are performed within one cycle.

First, at S1105, the acquisition unit 50 acquires an image from the imaging device 11. At S1110, the object detector 60 checks whether an object is present based on the acquired image. When no object is present, the processing returns to S1105. When an object is present, the processing proceeds to S1115.

At S1115, the receiver 52 receives the wireless signal from the pen 15. At S1120, the object identification unit 62 identifies the object as the pen 15. Because FIG. 11 illustrates an example of operation in which an object is detected and the object is identified as the pen 15, the steps of identifying the object as the finger, detecting the position of the finger, and performing drawing as illustrated in FIG. 8 are omitted.

At S1125, the determination unit 63 checks the image to determine whether the light is turned off. In a case in which the light is not turned off, the processing proceeds to S1130. At S1130, the determination unit 63 instructs the light emission control unit 64 to turn off emission of light by the light-emitting device 12. At S1135, the light emission control unit 64 waits until the period of time of the light-off standby has elapsed. At S1140, the light emission control unit 64 instructs the light-emitting device 12 to turn off light, and the processing returns to S1105.

In a case in which the determination unit 63 determines, at S1125, that the light is turned off, the processing proceeds to S1145. At S1145, the position detector 61 detects the position of the pen 15 based on the acquired image in accordance with an instruction from the determination unit 63. At S1150, the transmitter 65 transmits the position information of the detected position. At S1155, the drawing unit 54 performs drawing. After the completion of the drawing by the drawing unit 54, the processing returns to S1105, and the processing is repeated from S1105 for a next image. While the presence of the pen 15 is being continuously detected, the detection of position of the pen 15 at S1145, the transmission of position information at S1150, and the drawing at S1155 are repeated.

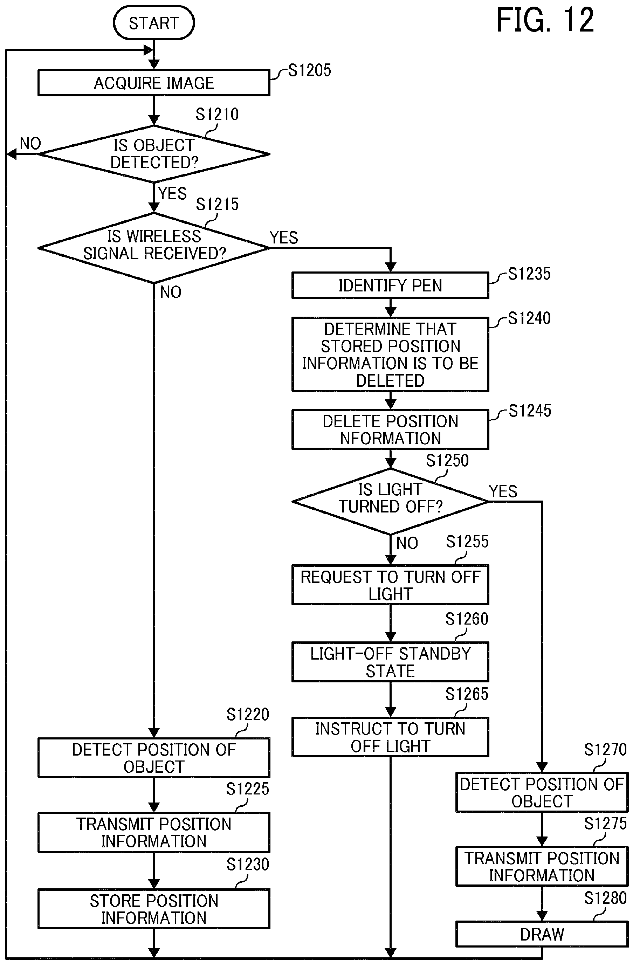

Hereinafter, a description is given of steps in an operation performed in a case in which an interruption is detected because the pen 15 approaches the screen of display 10 at low speed, with reference to FIG. 12. In this operation illustrated in FIG. 12, the interruption is detected during the above-described cycle at which processing of detecting the object and identifying the object is repeated. Accordingly, the identification of an object as the pen 15 takes a time that is longer than the cycle.

First, at S1205, the acquisition unit 50 acquires an image from the imaging device 11. At S1210, the object detector 60 checks whether an object is present based on the acquired image. When no object is present, the processing returns to S1205. When an object is present, the processing proceeds to S1215.

At S1215, the object identification unit 62 determines whether the receiver 52 has received the wireless signal from the pen 15. In a case in which the receiver 52 has not received the wireless signal, the processing proceeds to S1220. At S1220, the position detector 61 detects the position of the object based on the acquired image in accordance with an instruction from the determination unit 63. Because FIG. 12 illustrates an example of operation in which the pen 15 is detected within the standby time, an operation of checking whether the standby time elapses performed at S850 of FIG. 8 is omitted. At S1225, the transmitter 65 transmits the position information of the detected position to the storage unit 53. At S1230, the storage unit 53 stores the position information received from the transmitter 65, and the processing returns to S1205. In response to receiving the position information, the storage unit 53 stores the position information in a chronological order in the storage area that the storage unit 53 includes.

In a case in which the object identification unit 62 determines, at 1215, that the receiver 52 has received the wireless signal from the pen 15, the processing proceeds to S1235. At S1235, the object identification unit 62 identifies the object as the pen 15. At S1240, the determination unit 63 determines that the position information stored by the storage unit 53 is to be erased. At S1245, the storage unit 53 erases the stored position information. At S1250, the determination unit 63 checks the image to determine whether the light is turned off. In a case in which the light is not turned off, the processing proceeds to S1255. At S1255, the determination unit 63 instructs the light emission control unit 64 to turn off emission of light by the light-emitting device 12. At S1260, the light emission control unit 64 waits until the period of time of the light-off standby elapses. At S1265, the light emission control unit 64 instructs the light-emitting device 12 to turn off light, and the processing returns to S1205.

In a case in which the determination unit 63 determines, at S1250, that the light is turned off, the processing proceeds to S1270. At S1270, the position detector 61 detects the position of the pen 15 based on the acquired image in accordance with an instruction from the determination unit 63. At S1275, the transmitter 65 transmits the position information of the detected position to the drawing unit 54. At S1280, the drawing unit 54 performs drawing, and the processing returns to S1205. While the presence of the pen 15 is being continuously detected, the detection of position of the pen 15 at S127, the transmission of position information at S1275, and the drawing at S1280 are repeated.

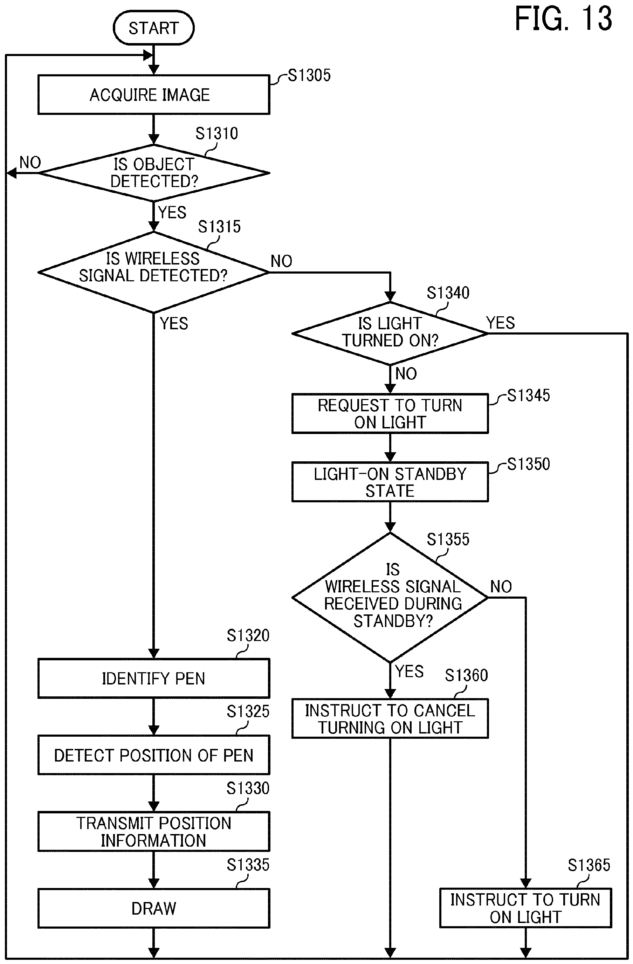

Hereinafter, a description is given of steps in an operation of performed in a case in which data input by the pen 15 is finished, with reference to FIG. 13. First, at S1305, the acquisition unit 50 acquires an image from the imaging device 11. At S1310, the object detector 60 checks whether an object is present based on the acquired image. When an object is present, the processing proceeds to S1315. At S1315, the object identification unit 62 determines whether the receiver 52 has received the wireless signal from the pen 15. In a case in which the receiver 52 has received the wireless signal, the processing proceeds to S1320. At S1320, the object identification unit 62 identifies the object as the pen 15.

At S1325, the position detector 61 detects the position of the pen 15 based on the acquired image in accordance with an instruction from the determination unit 63. At S1330, the transmitter 65 transmits the position information of the detected position to the drawing unit 54. At S1335, the drawing unit 54 performs drawing, and the processing returns to S1305. While the presence of the pen 15 is being continuously detected, the processing from S1305 to S1335 is repeated.

In a case in which the object detector 60 determines, at S1310, that no object is present, the processing returns to S1305. In a case in which the object identification unit 62 determines, at S1315, that the receiver 52 has not received the wireless signal from the pen 15, the processing proceeds to S1340.

At S1340, the determination unit 63 checks the image to determine whether the light is turned on. In a case in which the light is turned off, the processing proceeds to S1345. At S1345, the determination unit 63 instructs the light emission control unit 64 to turn on emission of light by the light-emitting device 12. At S1350, the light emission control unit 64 waits until the period of time of the light-on standby elapses. In this example, the period of time of the light-on standby is set to 500 milliseconds.

At S1355, the object identification unit 62 determines whether the receiver 52 has received the wireless signal from the pen 15 before the period of time of the light-on standby elapsed. In a case in which the receiver 52 has received the wireless signal from the pen 15 (S1355: YES), the processing proceeds to S1360. At S1360, the determination unit 63 instructs the light emission control unit 64 to cancel emission of light, and the processing returns to S1305. By contrast, in a case in which the receiver 52 has not received the wireless signal from the pen 15 before the period of time of the light-on standby elapsed (S1355: NO), the processing proceeds to S1365. At S1365, the light emission control unit 64 instructs the light-emitting device 12 to emit light, and the processing returns to S1305.

In a case in which the receiver 52 has received the wireless signal from the pen 15 before the period of time of the light-on standby elapsed (S1355: YES), the detection of position of the pen 15 at S1325, the transmission of position information at S1330, and the drawing at S1335 are continued. By contrast, in a case in which the receiver 52 has not received the wireless signal from the pen 15 before the period of time of the light-on standby elapsed (S1355: NO), the light is turned on and therefore the operating mode transitions to the finger detection mode. In a case in which the determination unit 63 determines, at S1340, that the light is turned on, no request for light emission is necessary. Accordingly, the processing returns to S1305.

It should be noted that although a description is given of an example in which the period of time of the light-on standby is 500 milliseconds, it could be any other period of time such as 300 milliseconds and 400 milliseconds. Further, the period of time of the light-on standby could be the same or substantially the same as that of the light-off standby. In this example, the period of time of the light-on standby is longer that of the light-off standby. With this configuration, even in a case in which the pen 15 is brought into contact with the screen and is made apart from the screen at short intervals when inputting data such as writing a dotted line, the light is kept on. In other words, the light is not turned off every time the user starts writing. Further, when a user starts to write figures or characters, a handwritten line is displayed on the display 10 at the same or substantially the same time point that the pen 15 is brought into contact with the screen of the display 10. Furthermore, the beginning portion of a line that the user actually intends to write by hand is prevented from not being drawn for display.

As described heretofore, according to an embodiment of the present disclosure, a line that the user actually intends to write by hand is drawn and displayed without lack of a beginning portion of the line.

The above-described embodiments are illustrative and do not limit the present disclosure. Thus, numerous additional modifications and variations are possible in light of the above teachings. For example, elements and/or features of different illustrative embodiments may be combined with each other and/or substituted for each other within the scope of the present disclosure.

Any one of the above-described operations may be performed in various other ways, for example, in an order different from the one described above.

The description is given above of an example in which the functional blocks illustrated in FIGS. 6 and 7 are implemented by one or more hardware components illustrated in FIG. 5, when operating in accordance with instructions from the CPU 30 executing according to the program loaded into the RAM 32 from the SDD 33. Alternatively, at least a part of these functional blocks may be implemented by a dedicated hardware circuit such as a semiconductor integrated circuit.

## Claims

1. An information processing apparatus (13) for detecting a position of an object on a display screen, comprising:
acquisition means (50) for acquiring, from one or more imaging devices (11), one or more images of the display screen captured with the one or more imaging devices, the one or more images of the display screen including an image of a surface or a space in vicinity of the surface of the display screen;
object detection means (60) for detecting an object from the one or more images acquired by the acquisition means (50);
position detection means (61) for detecting a position of the object detected by the object detection means (60) based on the one or more images acquired by the acquisition means (50);
storing means (53) for storing position information indicating the position detected by the position detection means (61);
object identification means (62) for identifying the object based on whether a notification is received from the object, during a time period from a time when the object detection means (60) detects the object to a time when a predetermined period of time elapses, the notification indicating that the object is brought into contact with the display screen; and
determination means (63) for determining whether to delete the position information depending on the object identified by the object identification means (62), the position information being stored by the storing means (53) during a time period from the time when the object detection means (60) detects the object to a time when the object identification means (62) identifies the object.

2. The information processing apparatus (13) of claim 1, further comprising light emission control means (64) for controlling one or more light-emitting devices (12) to irradiate a surface of the display screen with light, wherein:
the object detection means (60) controls the light emission control means (64) to control the one or more light-emitting devices (12) to emit light;
the object detection means (60) detects an area having a luminance that is less than or equal to a threshold in the one or more images acquired by the acquisition means (50) from the one or more imaging devices (11), to detect the object;
the object identification means (62) identifies the detected object as an electronic pen in a case in which the notification is received from the object before the predetermined period of time elapses, the electronic pen being configured to emit light and transmit the notification when brought into contact with the screen; and
the object identification means (62) instructs the light emission control means (64) to control the one or more light-emitting devices (12) to stop irradiating the surface of the display screen when the object identification means (62) identifies the detected object as the electronic pen.

3. The information processing apparatus (13) of claim 2, wherein:
the object identification means (62) waits until a certain period of time elapses from a time when no notification is received from the electronic pen;
the object identification means (62) identifies the object as an object other than the electronic pen, when the certain period of time elapses since the last time the notification is received from the electronic pen; and
the object identification means (62) instructs the light emission control means (64) to control the one or more light-emitting device (12) to irradiate the surface of the display screen when the object identification means (62) identifies the detected object as the object other the electronic pen.

4. The information processing apparatus (13) of any one of claims 1 to 3, wherein:
the object identification means (62) identifies the detected object as an electronic pen in a case in which the notification is received from the object before the predetermined period of time elapses, the electronic pen being configured to emit light and transmit the notification wirelessly when brought into contact with the screen;
the object identification means (62) identifies the detected object as an object other than the electronic pen in a case in which no notification is received from the detected object before the predetermined period of time elapses; and
the determination means (63) erases the position information stored by the storing means (53) in a case in which the object identification means (62) identifies the detected object as the electronic pen.

5. The information processing apparatus (13) of claim 4, further comprising drawing means (54) for drawing a display image for display on the display screen using the position information, wherein:
in a case in which the object identification means (62) identifies the detected object as the electronic pen, the drawing means (54) draws the display image using the position information of the pen detected by the position detection means (61) after the identification of the object as the electronic pen; and
in a case in which the object identification means (62) identifies the detected object as the object other than the electronic pen, the drawing means (54) draws the display image using the position information of the object other than the electronic pen detected by the position detection means (61) after the identification and the position information that has been stored by the storing means (53) before the identification.

6. The information processing apparatus (13) of any one of claims 1 to 5, wherein, in a case in which the object detection means (60) once detects the object and then no longer detects the object before the time when the predetermined period of time elapses, the object identification means (62) stops identifying the object, and the storing means (53) delete the position information that has been stored.

7. The information processing apparatus (13) of any one of claims 1 to 6, wherein, when the object includes a plurality of objects,
the object detection means (60) detects each one of the plurality of objects; and
the storing means (53) stores the position information indicating the detected positions of the plurality of the objects detected by the position detection means (61) respectively in a plurality of storage areas.

8. An information input system comprising:
the information processing apparatus (13) of any one of claims 1 to 7;
a display device (10) having a display screen; and
one or more imaging device (11), each configured to capture an image of the display screen.

9. The information input system of claim 8, further comprising:
one or more light-emitting devices (12), each configured to irradiate a surface of the display screen with light; and
an electronic pen (15) to emit light and transmit a notification wirelessly when the pen (15) is brought into contact with the display screen.

10. A method for processing information, performed by an information processing apparatus (13) to detect a position of an object on a display screen, the method comprising:
acquiring (S805, S1005, S1105, S1205, S1305), from one or more imaging devices, one or more images of the display screen captured with the one or more imaging devices, the one or more images of the display screen including an image of a surface or a space in vicinity of the surface of the display screen;
detecting (S810, S1010, S1100, S1210, S1310) an object from the one or more images of the display screen;
detecting (S835, S855, S1020, S1040, S1145, S1220, S1270) a position of the object based on the one or more images of the display screen;
storing (S865, S1030, S1230) position information indicating the detected position of the object;
identifying (S815, S870, S1120, S1235, S1320) the object based on whether a notification is received from the object, during a time period from a time when the object is detected to a time when a predetermined period of time elapses, the notification indicating that the object is brought into contact with the display screen; and
determining (S820, S1240), whether to delete the position information depending on the identified object, the position information being stored during a time period from the time when the object is detected to a time when the object is identified.

11. The method for processing information of claim 10, further comprising controlling (S1130, S1255, S1345) one or more light-emitting devices to irradiate a surface of the display screen with light, wherein:
the step of detecting the object includes detecting an area having a luminance that is less than or equal to a threshold in the one or more images of the display screen;
the step of identifying includes identifying the detected object as an electronic pen in a case in which the notification is received from the object before the predetermined period of time elapses, the electronic pen being configured to emit light and transmit the notification when brought into contact with the screen; and
the step of instructing includes controlling the one or more light-emitting devices to stop irradiating the surface of the display screen when the step of identifying identifies the detected object as the electronic pen.

12. The method for processing information of claim 11, wherein:
the step of identifying includes:
waiting until a certain period of time elapses when no notification is received from the object that is identified as the electronic pen; and
identifying the object as an object other than the electronic pen, when the certain period of time elapses since the last time the notification is received from the object identified as the electronic pen, and
the step of instructing includes instructing the one or more light-emitting device to irradiate the surface of the display screen when the detected object is identified as the object other the electronic pen.

13. The method for processing information of any one of claims 10 to 12, wherein:
the step of identifying includes:
identifying the detected object as an electronic pen in a case in which the notification is received from the object before the predetermined period of time elapses, the electronic pen being configured to emit light and transmit the notification wirelessly when brought into contact with the screen; and
identifying the detected object as an object other than the electronic pen in a case in which no notification is received from the detected object before the predetermined period of time elapses, and
the step of determining includes determining to delete the stored position information when the step of identifying identifies the detected object as the electronic pen.

14. The method for processing information of claim 13, further comprising drawing (S845, S1055, S1065, S1155, S1280, S1335) a display image for display on the display screen using the position information, wherein
the step of drawing includes:
in a case in which the detected object is identified as the electronic pen, drawing the display image using position information of the pen detected after the identification of the object as the electronic pen; and
in a case in which the detected object is identified as the object other than the electronic pen, drawing the display image using position information of the object other than the electronic pen detected after the identification and the position information that has been stored before the identification.

15. The method for processing information of any one of claims 10 to 14, further comprising stopping identifying the object and deleting the position information that has been stored, in a case in which the object is no longer detected before the time when the predetermined of time elapses.
